# EUROPEAN PATENT APPLICATION

(11) **EP 4 576 381 A1**
(43) Date of publication of application: **25.06.2025**
(21) Application number: 23889091.7
(22) Date of filing: 06.11.2023
(51) Int. Cl.: H01M 50/367, H01M 50/383, H01M 50/204, H01M 50/249

(54) **BATTERY PACK AND VEHICLE COMPRISING SAME**

(30) Priority: 09.11.2022 KR 20220149030
(71) Applicant: LG Energy Solution, Ltd., Seoul 07335 (KR)
(72) Inventor: HUR, Nam Hoon, Daejeon 34122 (KR); SHIN, Ju-Hwan, Daejeon 34122 (KR); YANG, Chang-Hyeon, Daejeon 34122 (KR); LEE, Jae-Hyun, Daejeon 34122 (KR); LEE, Hyoung-Suk, Daejeon 34122 (KR)
(74) Representative: Plasseraud IP
(86) International application number: PCT/KR2023/017697
(87) International publication number: WO 2024/101831

(57) **Abstract**

The present disclosure provides a battery pack configured such that, when gas is generated inside a battery module, high-temperature gas is to be discharged to the outside of the battery pack without affecting other adjacent battery modules. A battery pack according to one aspect of the disclosure includes a pack housing, a first battery module, a second battery module, and a pack cover.

## Description

### TECHNICAL FIELD

The present disclosure relates to a battery pack and a vehicle including the same, and more specifically, it relates to a battery pack configured such that, when gas is generated inside a battery module, high-temperature gas is to be discharged to the outside of the battery pack without affecting other adjacent battery modules, and a vehicle including the same.

The present application claims priority to Korean Patent Application No. 10-2022-0149030 filed on November 09, 2022 in the Republic of Korea, the disclosures of which are incorporated herein by reference.

### BACKGROUND ART

As the demand for portable electronic products such as laptops, video cameras, mobile phones, and the like is rapidly increasing and robots, electric vehicles, and the like are widely commercialized, active research on high-performance secondary batteries capable of being repeatedly charged and discharged is underway.

Currently commercialized secondary batteries include nickel-cadmium batteries, nickel-hydrogen batteries, nickel-zinc batteries, lithium secondary batteries, and the like, and among them, lithium secondary batteries are in the spotlight for their advantages of free charging and discharging due to almost no memory effect, a very low self-discharge rate, and a high energy density, compared to nickel-based secondary batteries. These lithium secondary batteries mainly use lithium-based oxides and carbon materials as positive and negative electrode active materials, respectively. Lithium secondary batteries include an electrode assembly in which the positive and negative electrode plates, which are respectively coated with the positive and negative electrode active materials, are disposed with a separator therebetween, and an exterior case, i.e., a battery case that seals and stores the electrode assembly with an electrolyte.

In general, lithium secondary batteries may be classified, depending on the shape of the exterior case, into can-type secondary batteries in which the electrode assembly is accommodated in a metal can and pouch-type secondary batteries in which the electrode assembly is accommodated in a pouch of an aluminum laminate sheet.

Recently, secondary batteries have been widely used in medium and large devices such as electric vehicles and energy storage systems (ESSs), as well as in small devices such as portable electronic devices, for driving or energy storage. These secondary batteries may be electrically connected and stored inside a module case to form a battery module, and these battery modules may be electrically reconnected in a narrow space to increase energy density to form a battery pack.

However, in the case where a large number of battery modules are provided together in a small space, they may be vulnerable to accidents such as fire or explosion. For example, if an event such as thermal runaway occurs in any one of the battery modules, high-temperature gas may be emitted from the battery module. If this gas fails to be appropriately discharged to the outside of the battery pack, it may transfer to other battery modules provided inside the battery pack, causing a chain reaction. In addition, in this case, the pressure inside the battery pack increases, which may lead to explosion. If the battery pack explodes, it cause great damage to surrounding devices and users due to the explosion pressure, and the area and speed of damage may also increase. Therefore, the development of a battery pack is required to have a structure capable of safely discharging, when gas is emitted due to an abnormality in some battery modules, high-temperature gas to the outside of the battery pack without affecting other adjacent battery modules.

### DISCLOSURE

### Technical Problem

The present disclosure has been designed to solve the problems of the related art, and therefore, the present disclosure according to one aspect is intended to control the flow of gas in a desired direction by adding an additional venting passage formation structure to a component that serves as a frame of an existing battery pack.

In another aspect, the present disclosure is intended to ensure that high-temperature gas emitted when a thermal event occurs in some battery modules is to be safely discharged to the outside of the battery pack without affecting other battery modules inside the battery pack.

In another aspect, the present disclosure is intended to control the flow of gas through independent paths depending on the position where a thermal event occurs.

### Technical Solution

According to one aspect of the present disclosure, there is provided a battery pack that includes a pack housing including a bottom plate having a first accommodation space and a second accommodation space spaced apart from the first accommodation space, a first side frame coupled to one side of the bottom plate, and a second side frame coupled to the other side opposite the one side of the bottom plate, at least one first battery module disposed inside the first accommodation space, at least one second battery module disposed inside the second accommodation space, and a pack cover configured to cover the first accommodation space and the second accommodation space.

The first side frame has a first side venting passage configured to guide gas generated from the first battery module to at least one of both ends of the first side frame.

The second side frame has a second side venting passage configured to guide gas generated from the second battery module to at least one of both ends of the second side frame.

The pack cover includes a first top venting passage configured such that the first accommodation space communicates with the first side venting passage, and a second top venting passage configured such that the second accommodation space communicates with the second side venting passage.

A plurality of first battery modules and a plurality of second battery modules may be provided.

The pack housing may include partitions disposed at respective positions between the first battery modules adjacent to each other and at respective positions between the second battery modules adjacent to each other.

The partition may be coupled to the pack cover so as to block movement of venting gas between the accommodation spaces of the respective first battery modules adjacent to each other and movement of venting gas between the accommodation spaces of the respective second battery modules adjacent to each other.

A sealing member may be provided between the partition and the pack cover.

The first side venting passage may include: a first upper passage communicating with the first top venting passage; and a first lower passage provided below the first upper passage so as not to directly communicate with the first upper passage.

The second side venting passage may include; a second upper passage communicating with the second top venting passage; and a second lower passage provided below the second upper passage so as not to directly communicate with the second upper passage.

The pack housing may further include a center frame having a central venting passage communicating with the first accommodation space and the second accommodation space.

The central venting passage may include: a first central venting passage communicating with the first accommodation space; and a second central venting passage that communicates with the second accommodation space and does not directly communicate with the first central venting passage.

The pack housing may have a gas collecting space formed on at least one of one side and the other side along the extension direction of the central venting passage, the first side venting passage, and the second side venting passage.

The gas collecting space may communicate with the central venting passage, the first side venting passage, and the second side venting passage.

The pack housing may have a venting hole configured to discharge gas from the gas collecting space to the outside of the pack housing.

The first top venting passage and the second top venting passage may be formed on the inner surface of the pack cover.

The first top venting passage and the second top venting passage may be formed inside the pack cover.

The pack cover may include: a cover plate that covers the accommodation space of the pack housing; a first passage plate coupled to the inner surface of the cover plate in the first accommodation space; and a second passage plate coupled to the inner surface of the cover plate in the second accommodation space.

According to another aspect of the present disclosure, there is provided a vehicle including the battery pack according to the embodiment of the present disclosure.

### Advantageous Effects

According to one aspect of the present disclosure, gas is discharged through a venting passage close to the position where a thermal event occurs in each battery module, so that the gas can be effectively discharged.

According to another aspect of the present disclosure, the gas on the sides of the battery module moves along the side venting passage, and the gas on the top of the battery module moves along the top venting passage, thereby reducing the possibility of thermal events spreading to adjacent battery modules.

According to another aspect of the present disclosure, the gas that has moved to the top venting passage can move again along the side venting passage, whereby the temperature of the gas may drop during movement, and even if flame is generated along with the gas, the intensity of the flame may weaken while moving along the venting passage. Accordingly, it is possible to eliminate or reduce damage that may occur when high-temperature gas and flame are ejected to the outside.

According to another aspect of the present disclosure, a venting passage may be configured in the side frames and the pack cover of the pack housing, which are general components of a battery pack, thereby adding a function of controlling the flow of gas.

According to another aspect of the present disclosure, the accommodation spaces of respective first battery modules adjacent to each other and the accommodating spaces of respective second battery modules adjacent to each other may be structurally isolated from each other by partitions. Accordingly, the gas generated in a specific battery module moves through the side venting passage and top venting passage, instead of moving to a battery module adjacent thereto. During such movement, the temperature of the gas may be lowered and the intensity of the flame may weaken, thereby minimizing the influence of the high-temperature flame and venting gas generated from each battery module on other battery modules.

According to another aspect of the present disclosure, the gas moves to the lower passage or the top venting passage through the side opening and then moves to the upper passage through the upper opening, so that the gas movement paths are independent from each other depending on the position where the thermal event occurs in the respective battery modules. Therefore, there is a time difference in the discharge of gas depending on the position where the thermal event occurs, thereby preventing fire or delaying the spread of fire.

According to another aspect of the present disclosure, gas is discharged through the central venting passage, as well as through the side venting passage and the top venting passage. Therefore, the gas more can be more effectively discharged, thereby significantly reducing the possibility of thermal events spreading to adjacent battery modules.

According to another aspect of the present disclosure, if the internal pressure of the battery pack increases because a large amount of gas is simultaneously generated, the internal pressure of the battery pack can be quickly reduced through the gas collecting space, which is relatively larger in volume than the side venting passage and central venting passage. In addition, the gas can be discharged in an intended direction through the venting holes, and even if a large amount of venting gas is generated momentarily, the gas can be discharged more quickly and effectively by increasing the sizes or the number of venting holes.

In addition, the present disclosure may have various other effects, and these will be described in the respective embodiments, or description of effects that may be easily inferred by those skilled in the art will be omitted.

### DESCRIPTION OF DRAWINGS

The accompanying drawings herein illustrate a preferred embodiment of the present disclosure and, together with the detailed description of the invention, serve to provide further understanding of the technical idea of the present disclosure, and thus, the present disclosure is not construed as being limited to the drawings.
FIG. 1 is an exploded perspective view showing a battery pack according to an embodiment of the present disclosure.
FIG. 2 is a perspective view illustrating the appearance of a battery pack according to an embodiment of the present disclosure.
FIG. 3 is a diagram illustrating the flow of gas in the space between a pack housing and a pack cover included in a battery pack according to an embodiment of the present disclosure.
FIG. 4 is a partially cross-sectional view illustrating a first side frame of the pack housing shown in FIG. 3.
FIG. 5 is a partially cross-sectional view illustrating a center frame of the pack housing shown in FIG. 3.
FIG. 6 is a diagram illustrating an embodiment in which a gas collecting space is formed inside a pack housing of the present disclosure.
FIG. 7 is a diagram illustrating an embodiment of a pack cover included in a battery pack of the present disclosure.
FIG. 8 is a diagram illustrating a pack cover included in a battery pack of the present disclosure, which is an embodiment different from that shown in FIG. 7.
FIG. 9 is a diagram schematically illustrating a vehicle including a battery pack according to an embodiment of the present disclosure.

### BEST MODE

Hereinafter, preferred embodiments of the present disclosure will be described in detail with reference to the accompanying drawings. The accompanying drawings herein illustrate a preferred embodiment of the present disclosure and, together with the detailed description of the invention, serve to provide further understanding of the technical idea of the present disclosure, and thus, the present disclosure is not construed as being limited to the drawings. The same reference numerals indicate the same elements. In addition, the elements may be exaggerated in their thicknesses, ratios, and sizes in the drawings in order to effectively explain the technical features of the present disclosure.

It should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Although terms indicating directions such as up, down, left, right, front, and back are used in this specification, it is obvious to those skilled in the art that these terms are only for convenience of explanation and may vary depending on the position of the target object or the position of the observer.

Therefore, the configuration proposed in the embodiments and drawings of this specification indicates only the most preferable embodiment of the present disclosure and does not represent all technical ideas of the present disclosure, so it should be understood that various equivalents and modifications could be made thereto at the time of filing the application.

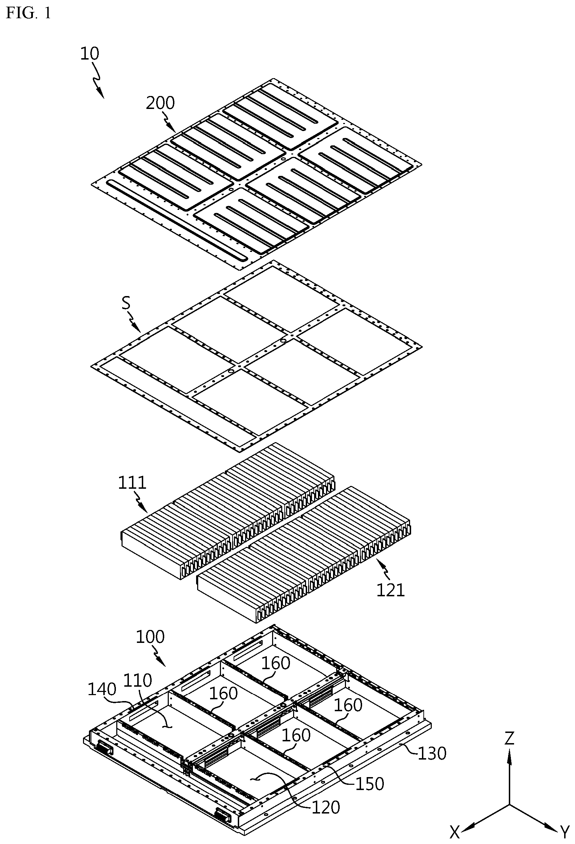

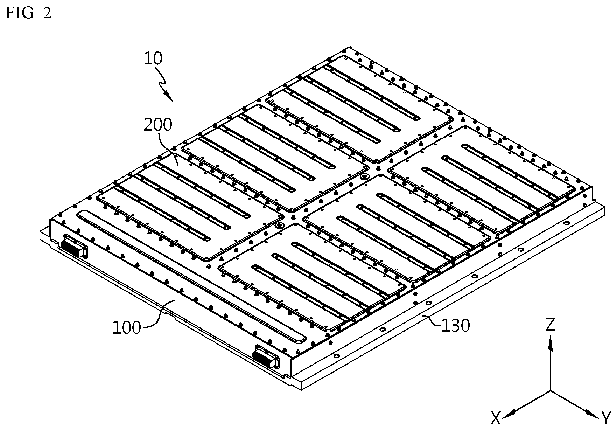

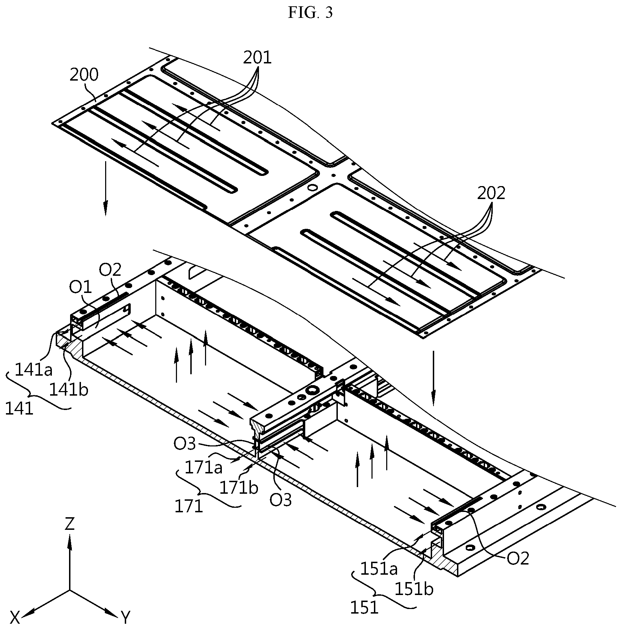

FIG. 1 is an exploded perspective view showing a battery pack 10 according to an embodiment of the present disclosure. FIG. 2 is a perspective view illustrating the appearance of a battery pack 10 according to an embodiment of the present disclosure. FIG. 3 is a diagram illustrating the flow of gas in the space between a pack housing 100 and a pack cover 200 included in a battery pack 10 according to an embodiment of the present disclosure.

Referring to FIGS. 1 to 3, the battery pack according to an embodiment of the present disclosure includes a pack housing, a battery module, and a pack cover.

Referring to FIG. 1, the pack housing 100 includes a bottom plate 130 having a first accommodation space 110 and a second accommodation space 120 positioned spaced apart from the first accommodation space 110, a first side frame 140 coupled to one side of the bottom plate 130, and a second side frame 150 coupled to the other side opposite one side of the bottom plate 130. The first side frame 140 may have an approximate plate shape. The first side frame 140 may be configured to extend in one direction along the coupling portion with one side of the bottom plate 130. The second side frame 150 may have an approximate plate shape. The second side frame 150 may be configured to extend in one direction along the coupling portion with the other side of the bottom plate 130. The bottom plate 130 and the first side frame 140 may be configured to be at least partially integrated with each other. Likewise, the bottom plate 130 and the second side frame 150 may be configured to be at least partially integrated with each other. Alternatively, the respective members may be manufactured separately and then joined to each other by welding or bolting.

A first battery module 111 is disposed inside the first accommodation space 110. A second battery module 121 is disposed inside the second accommodation space 120. A plurality of first battery modules 111 and a plurality of second battery modules 121 may be provided, and accordingly, the first accommodation space 110 and the second accommodation space 120 may also have a plurality of spaces accommodating the respective battery modules. The first battery module 111 and the second battery module 121 may include a plurality of battery cells. The battery cell may include an electrode assembly, an electrolyte, a battery case accommodating the electrode assembly and the electrolyte, and a pair of electrode leads connected to the electrode assembly and extending to the outside of the battery case. For example, the battery cell may be a pouch-type secondary battery. However, other types of secondary batteries, such as cylindrical batteries or prismatic batteries, may also be used as the battery cells of the present disclosure. The first battery module 111 and the second battery module 121 may include a plurality of battery cells stacked on each other. In addition, although not shown in the drawings, the first battery module 111 and the second battery module 121 may further include various elements included in the battery module, in addition to the plurality of stacked battery cells. For example, the battery module according to the present disclosure may further include, in addition to the plurality of battery cells stacked on each other, a module housing that accommodates the plurality of stacked battery cells components and components such as a bus bar capable of electrically connecting electrode leads of the respective battery cells and the like. The module housing may include a venting portion configured to discharge gas generated from the battery module, and the venting portion may be provided at the positions corresponding to a side opening O1 and/or a center opening O2, and/or an inlet O5, which will be described below.

The pack cover 200 is configured to cover the first accommodation space 110 and the second accommodation space 120. The pack cover 200 may be configured to be coupled to the pack housing 100 to cover the first battery module 111 and the second battery module 121 inside the first accommodation space 110 and the second accommodation space 120. The pack cover 200 may have an approximate plate shape.

Referring to FIGS. 1 to 3, the first side frame 140 has a first side venting passage 141 configured to guide gas generated from the first battery module 111 to at least one of both ends of the first side frame 140. The first side venting passage 141 may extend along the extension direction (X-axis direction) of the first side frame 140. The second side frame 150 has a second side venting passage 151 configured to guide gas generated from the second battery module 121 to at least one of both ends of the second side frame 150. The second side venting passage 151 may extend along the extension direction (X-axis direction) of the second side frame 150. The first side frame 140 and the second side frame 150 may have the first side venting passage 141 and the second side venting passage 151 in their internal spaces. The gas caused by a thermal event occurring in the first battery module 111 disposed in the first accommodation space 110 may move to the first side frame 140 and move to the first side venting passage 141 through a side opening O1 provided on the side surface (the surface approximately parallel to the X-Z plane) of the first side frame 140. The gas caused by a thermal event occurring in the second battery module 121 disposed in the second accommodation space 120 may move to the second side frame 150 and move to the second side venting passage 151 through a side opening O1 provided on the side surface (the surface approximately parallel to the X-Z plane) of the second side frame 150. The first side venting passage 141 may be configured to guide gas to at least one of both ends in the extension direction thereof, and in this case, at least one of both ends of the first side frame 140 may be at least partially open. The second side venting passage 151 may be configured to guide gas to at least one of both ends in the extension direction thereof, and in this case, at least one of both ends of the second side frame 150 is at least partially open. The side venting passages 141 and 151 may include a single or a plurality of gas movement passages, and, if a plurality of gas movement passages is provided, the respective gas movement passages may be configured not to be in direct communication with each other.

Referring to FIGS. 1 to 3, the pack cover 200 include a first top venting passage 201 configured such that the first accommodation space 110 communicates with the first side venting passage 141, and a second top venting passage 202 configured such that the second accommodation space 120 communicates with the second side venting passage 151. The gas caused by a thermal event occurring in the first battery module 111 disposed in the first accommodation space 110 may move to the pack cover 200 and move along the first top venting passage 201, and may then move to the first side venting passage 141 through an upper opening O2 provided in the first side frame 140. The gas caused by a thermal event occurring in the second battery module 121 disposed in the second accommodation space 120 may move to the pack cover 200 and move along the second top venting passage 202, and may then move to the second side venting passage 151 through an upper opening O2 provided in the second side frame 150.

According to this configuration of the present disclosure, gas may be discharged through a venting passage close to the position where a thermal event occurs in each battery module, thereby effectively discharging the gas. The gas emitted from the sides of the battery module may move along the side venting passages 141 and 151, and the gas emitted from the top of the battery module may move along the top venting passages 201 and 202, thereby reducing the possibility of thermal events spreading to adjacent battery modules. In addition, according to this configuration of the present disclosure, the gas that has moved to the top venting passages 201 and 202 may move again along the side venting passages 141 and 151, so that the temperature of the gas may drop during movement, and even if flame is generated along with the gas, the intensity of the flame may weaken while moving along the venting passages. Accordingly, it is possible to eliminate or reduce damage that may occur when high-temperature gas and flame are ejected to the outside. In addition, according to this configuration of the present disclosure, venting passages may be configured in the side frames and the pack cover of the pack housing, which are general components of a battery pack, thereby adding a function of controlling the flow of gas.

Referring to FIGS. 1 to 3, in the case where a plurality of first battery modules 111 and a plurality of second battery modules 121 are provided, partitions 160 may be provided at the respective positions between the first battery modules 111 adjacent to each other and at the respective positions between the second battery modules 121 adjacent to each other. The partitions 160 may be combined with the pack cover 200 to block the movement of gas between the accommodation spaces of adjacent battery modules. The partition 160 and the pack cover 200 may be combined by, for example, welding or bolting.

According to this configuration of the present disclosure, the accommodation spaces of the respective first battery modules 111 adjacent to each other and the accommodation spaces of the respective second battery modules 121 adjacent to each other may be structurally isolated from each other by the partitions 160. Accordingly, the gas generated in a specific battery module does not move to the battery module adjacent thereto, but only moves through the side venting passages 141 and 151 and the top venting passages 201 and 202. During such movement, the temperature of the gas may be lowered and the intensity of flame may weaken, thereby minimizing the influence of the high-temperature flame and venting gas generated from each battery module on other battery modules.

Referring to FIGS. 1 to 3, a sealing member S may be provided between the partition 160 and the pack cover 200. The sealing member S may be configured to at least partially surround the coupling portion of the partition 160 and the pack cover 200. In this case, this may further improve the effect of preventing gas from moving through the gap between the partition 160 and the pack cover 200.

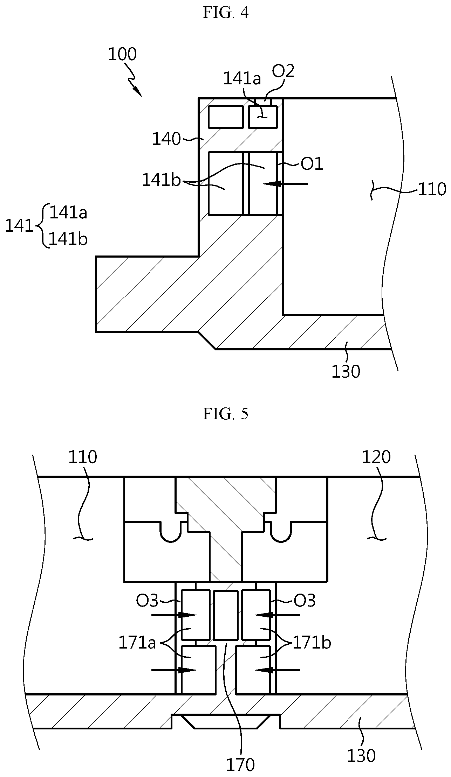

FIG. 4 is a partially cross-sectional view illustrating a first side frame of the pack housing shown in FIG. 3.

Referring to FIG. 4 together with FIG. 3, the first side venting passage 141 may include a first upper passage 141a that communicates with the first top venting passage 201, and a first lower passage 141b provided below the first upper passage 141a so as not to directly communicate with the first upper passage 141a. The second side venting passage 151 may include a second upper passage 151a that communicates with the second top venting passage 202, and a second lower passage 151b provided below the second upper passage 151a so as not to directly communicate with the second upper passage 151a. The configuration in which the upper passage 141a or 151a does not directly communicate with the lower passage 141b or 151b indicates that they may communicate with each other through the accommodation space 110 or 120, but that they do not directly communicate with each other in the internal space of the side frame 140 or 150, in the side venting passage 141 or 151 provided in the internal space of the side frame 140 or 150. Some of the gas caused by a thermal event occurring in the first battery module 111 disposed in the first accommodation space 110 may move to the first side frame 140 and then move to the first lower passage 141b through the side opening O1 provided on the side surface of the first side frame 140. In addition, some of the gas caused by a thermal event occurring in the first battery module 111 disposed in the first accommodation space 110 may rise to the pack cover 200 and move along the first top venting passage 201, and may then move to the first upper passage 141a through the upper opening O2 provided in the first side frame 140. Some of the gas caused by a thermal event occurring in the second battery module 121 disposed in the second accommodation space 120 may move to the second side frame 150 and then move to the second lower venting passage 151b through the side opening O1 provided on the side surface of the second side frame 150. In addition, some of the gas caused by a thermal event occurring in the second battery module 121 disposed in the second accommodation space 120 may rise to the pack cover 200 and move along the second top venting passage 202, and may then move to the second upper passage 151a through the upper opening O2 provided in the second side frame 150.

According to this implemented configuration of the present disclosure, the gas may move to the lower passage 141b or 151b or the top venting passage 201 or 202 through the side opening O1 and then move to the upper passage 141a or 151a through the upper opening O2, so that the gas movement paths are independent from each other depending on the position where the thermal event occurs in the respective battery modules. Therefore, there may be a time difference in the discharge of gas depending on the position where the thermal event occurs, thereby preventing fire or delaying the spread of fire.

FIG. 5 is a partially cross-sectional view illustrating a center frame 170 of the pack housing 100 shown in FIG. 3.

Referring to FIG. 5 together with FIG. 3, the pack housing 100 may further include a center frame 170 having a central venting passage 171 communicating with the first accommodation space 110 and the second accommodation space 120. The center frame 170 may be positioned in a space between the first accommodation space 110 and the second accommodation space 120. The center frame 170 may have a central venting passage 171 in the internal space thereof. The gas caused by thermal events occurring in the battery modules 111 and 121 may move to the center frame 170 and then move to the central venting passage 171 through a center opening O3 provided on the side surface (the surface approximately parallel to the X-Z plane) of the center frame 170. The central venting passage 171 may include a single or a plurality of gas movement passages and, if a plurality of gas movement passages is included, the respective gas movement passages may be configured not to be in direct communication with each other. For example, the central venting passage 171 may include a first central venting passage 171a that communicates with the first accommodation space 110, and a second central venting passage 171b that communicates with the second accommodation space 120 but does not directly communicate with the first central venting passage 171a. In this case, some of the gas caused by a thermal event occurring in the first battery module 111 disposed in the first accommodation space 110 may move to the center frame 170 and then move to the first central venting passage 171a through the center opening O3 provided on one side of the center frame 170. In addition, some of the gas caused by a thermal event generated in the second battery module 121 disposed in the second accommodation space 120 may move to the center frame 170 and then move to the second central venting passage 171b through the center opening O3 provided on the other side of the center frame 170. Meanwhile, the configuration in which the first central venting passage 171a and the second central venting passage 171b do not directly communicate with each other indicates that they may communicate with each other through other spaces or configurations of the battery housing 100, but that they do not directly communicate with each other in the internal space of the center frame 170, in the central venting passage 171 provided in the internal space of the center frame 170.

According to this configuration of the present disclosure, the gas may be discharged through the central venting passage 171, as well as through the side venting passages 141 and 151 and the top venting passages 201 and 202. Therefore, the gas more can be more effectively discharged, thereby significantly reducing the possibility of thermal events spreading to adjacent battery modules.

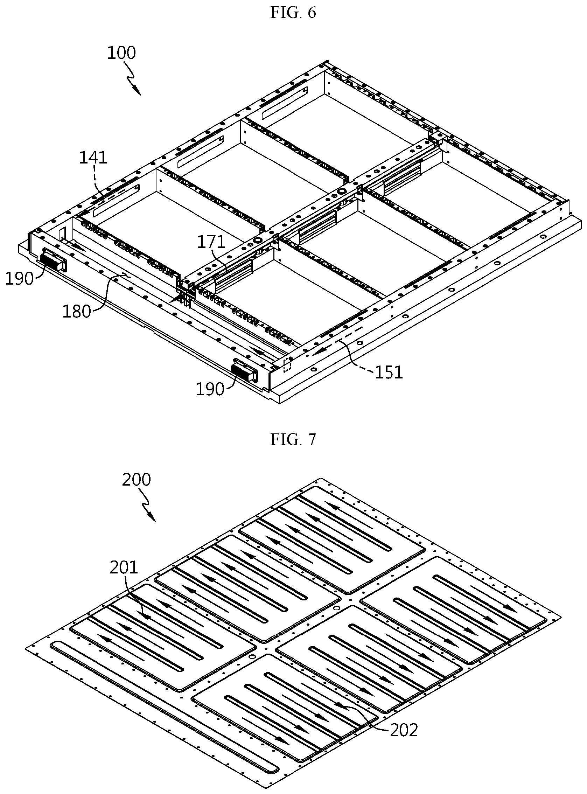

FIG. 6 is a diagram illustrating an embodiment in which a gas collecting space is formed inside a pack housing of the present disclosure.

Referring to FIG. 6, the pack housing 100 may have a gas collecting space 180 formed on at least one of one side and the other side thereof along the extension direction of the first side venting passage 141 and the second side venting passage 151. The gas collecting space 180 may communicate with the first side venting passage 141 and the second side venting passage 151. The gas caused by thermal events occurring in the battery modules 111 and 121 may move through the first side venting passage 141 and the second side venting passage 151 and collect in the gas collecting space 180. For example, the gas collecting space 180 may be provided at one end of the pack housing 100 in a direction parallel to the extension direction of the first side venting passage 141 and the second side venting passage 151. Additionally, the pack housing 100 may have a venting hole 190 configured to discharge gas from the gas collecting space 180 to the outside of the pack housing 100. The venting hole 190 may be formed to penetrate the pack housing 100. The venting hole 190 may be configured to be completely open, or may be configured to be closed, instead of to be completely open, in a normal state and to be opened depending on changes in pressure or temperature. However, the present disclosure is not limited to the shapes, positions, and number of gas collecting spaces shown in FIG. 6, or to the shape of the venting hole 190. Meanwhile, in the case where the battery housing 100 has the central venting passage 171, the gas collecting space 180 may also communicate with the central venting passage 171. In this case, the gas caused by thermal events occurring in the battery modules 111 and 121 may move through the first side venting passage 141, the second side venting passage 151, and the central venting passage 171 to collect in the gas collecting space 180.

According to this configuration of the present disclosure, if the internal pressure of the battery pack 10 increases because a large amount of gas is simultaneously generated, the internal pressure of the battery pack 10 may be quickly reduced through the gas collecting space 180, which is relatively larger in volume than the side venting passages 141 and 151 and the central venting passage 171. In addition, the gas may be discharged in an intended direction through the venting holes 190, and even if a large amount of venting gas is generated momentarily, the gas can be discharged more quickly and effectively by increasing the sizes or the number of venting holes 190.

FIG. 7 is a diagram illustrating an embodiment of a pack cover 200 included in a battery pack 10 of the present disclosure.

Referring to FIG. 7, the first top venting passage 201 and the second top venting passage 202 may be formed on the inner surface of the pack cover 200. The first top venting passage 201 and the second top venting passage 202 may be configured in the form of a groove formed on the inner surface of the pack cover 200. In this case, it may be implemented more easily than coupling a separate member to the pack cover in order to form the top venting passages 201 and 202, thereby facilitating production.

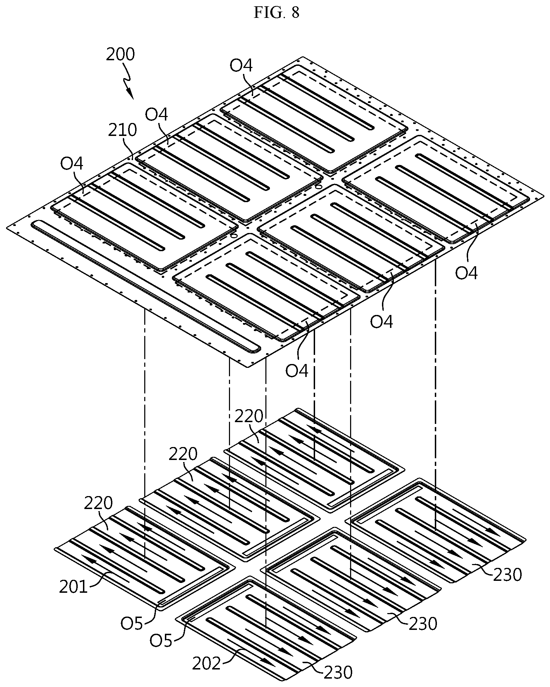

FIG. 8 is a diagram illustrating a pack cover 200 included in a battery pack 10 of the present disclosure, which is an embodiment different from that shown in FIG. 7.

Referring to FIG. 3 along with FIG. 8, the first top venting passage 201 and the second top venting passage 202 may be formed inside the pack cover 200. The pack cover 200, for example, may be configured as one member to form the first top venting passage 201 and the second top venting passage 202 therein. On the other hand, the pack cover 200 may include, for example, a plurality of members. In this case, the plurality of members may be combined to form the first top venting passage 201 and the second top venting passage 202 in the spaces between the plurality of members. The pack cover 200 may include, for example, a cover plate 210 that covers the accommodation space of the pack housing 100, a first passage plate 220 coupled to the inner surface of the cover plate 210 in the first accommodation space 110, and a second passage plate 230 coupled to the inner surface of the cover plate 210 in the second accommodation space 120.

The first passage plate 220 may have an inlet O5 and an outlet O4. The inlet O5 may be configured to communicate with the first accommodation space 110. The outlet O4 may be configured to communicate with the first side venting passage 141. In this case, the gas generated inside the first accommodation space 110 may flow into the first top venting passage 201 through the inlet O5, and the introduced gas may flow into the first side venting passage 141 through the outlet O4, thereby being discharged to the outside of the battery pack 10. In the case where the first side venting passage 141 includes the first upper passage 141a and the first lower passage 141b, the outlet O4 may be configured to communicate with the first upper passage 141a. Similarly, the second passage plate 230 may have an inlet O5 and an outlet O4. The inlet O5 may be configured to communicate with the second accommodation space 120. The outlet O4 may be configured to communicate with the second side venting passage 151. In this case, the gas generated inside the second accommodation space 120 may flow into the second top venting passage 202 through the inlet O5, and the introduced gas may flow into the second side venting passage 151 through the outlet O4, thereby being discharged to the outside of the battery pack 10. In the case where the second side venting passage 151 includes the second upper passage 151a and the second lower passage 151b, the outlet O4 may be configured to communicate with the second upper passage 151a. In this case, the first accommodation space 110 and the first upper passage 141a may communicate with each other through the first top venting passage 201, instead of directly communicating with each other. The second accommodation space 120 and the second upper passage 151a may communicate with each other through the second top venting passage 202, instead of directly communicating with each other.

Referring to FIGS. 3 and 8, the inlet O5 may be formed in the form of a rectangular opening or hole. The inlet O5 may be provided at a position close to the center frame 170. Since the first passage plate 220 and the second passage plate 230 are coupled to the cover plate 210 so as to be spaced a predetermined distance apart therefrom, the inlet O5 may be formed in the spaced gap. As the inlet O5 is provided closer to the center frame 170, the gas movement paths through the top venting passages 201 and 202 become longer, so that fire may prevented or the temperature of the gas may be lowered during the movement thereof, thereby effectively delaying the spread speed of fire.

The outlet O4 may be configured in the form of a rectangular opening or hole. The outlets O4 may be provided at positions corresponding to the side frames 140 and 150. The outlet O4 may be provided at a position corresponding to the upper opening O2. Since the first passage plate 220 and the second passage plate 230 are coupled to the cover plate 210 so as to be spaced a predetermined distance apart therefrom, the outlet O4 may be formed in the spaced gap. However, the present disclosure is not limited to the forms, formation methods, and positions of the inlet O5 and outlet O4.

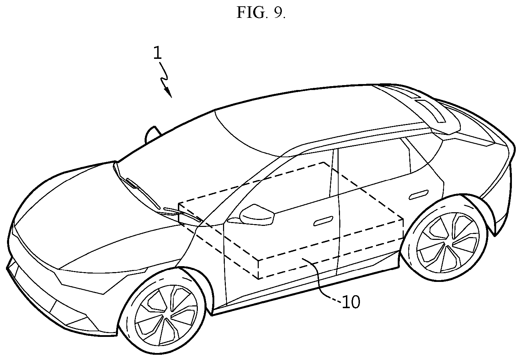

FIG. 9 is a diagram schematically illustrating a vehicle including a battery pack according to an embodiment of the present disclosure.

Referring to FIG. 9, the battery pack 10 according to the present disclosure may be applied to a vehicle 1 such as an electric vehicle or a hybrid vehicle. That is, the vehicle 1 according to the present disclosure may include the battery pack 10 according to the present disclosure. Additionally, the vehicle according to the present disclosure may further include various other elements included in the vehicle, in addition to the battery pack. For example, the vehicle according to the present disclosure may further include a car body, a motor, a control device such as an electronic control unit (ECU), and the like, in addition to the battery pack according to the present disclosure.

So far, although the present disclosure has been described based on preferred embodiments with reference to the accompanying drawings, those skilled in the art will clearly understand that various and obvious modifications are possible without departing from the scope of the present disclosure. Therefore, the scope of the present disclosure should be construed by the appended claims to include the various modifications.

## Claims

1. A battery pack comprising:
a pack housing comprising a bottom plate having a first accommodation space and a second accommodation space spaced apart from the first accommodation space, a first side frame coupled to one side of the bottom plate, and a second side frame coupled to the other side opposite the one side of the bottom plate;
at least one first battery module disposed inside the first accommodation space;
at least one second battery module disposed inside the second accommodation space; and
a pack cover configured to cover the first accommodation space and the second accommodation space,
wherein the first side frame has a first side venting passage configured to guide gas generated from the first battery module to at least one of both ends of the first side frame,
wherein the second side frame has a second side venting passage configured to guide gas generated from the second battery module to at least one of both ends of the second side frame, and
wherein the pack cover comprises a first top venting passage configured such that the first accommodation space communicates with the first side venting passage, and a second top venting passage configured such that the second accommodation space communicates with the second side venting passage.

2. The battery pack according to claim 1,
wherein a plurality of first battery modules and a plurality of second battery modules are provided, and
wherein the pack housing comprises
partitions disposed at respective positions between the first battery modules adjacent to each other and at respective positions between the second battery modules adjacent to each other.

3. The battery pack according to claim 2,
wherein the partition is coupled to the pack cover so as to block movement of venting gas between the respective accommodation spaces of a pair of the first battery modules adjacent to each other and movement of venting gas between the respective accommodation spaces of a pair of the second battery modules adjacent to each other.

4. The battery pack according to claim 3,
wherein a sealing member is provided between the partition and the pack cover.

5. The battery pack according to claim 2,
wherein the first side venting passage comprises: a first upper passage communicating with the first top venting passage; and a first lower passage provided below the first upper passage so as not to directly communicate with the first upper passage, and
wherein the second side venting passage comprises: a second upper passage communicating with the second top venting passage; and a second lower passage provided below the second upper passage so as not to directly communicate with the second upper passage.

6. The battery pack according to claim 1,
wherein the pack housing further comprises
a center frame having a central venting passage communicating with the first accommodation space and the second accommodation space.

7. The battery pack according to claim 6,
wherein the central venting passage comprises:
a first central venting passage communicating with the first accommodation space; and
a second central venting passage that communicates with the second accommodation space and does not directly communicate with the first central venting passage.

8. The battery pack according to claim 6,
wherein the pack housing has
a gas collecting space formed on at least one of one side and the other side along the extension direction of the central venting passage, the first side venting passage, and the second side venting passage.

9. The battery pack according to claim 8,
wherein the gas collecting space communicates with the central venting passage, the first side venting passage, and the second side venting passage.

10. The battery pack according to claim 9,
wherein the pack housing has a venting hole configured to discharge gas from the gas collecting space to the outside of the pack housing.

11. The battery pack according to claim 1,
wherein the first top venting passage and the second top venting passage are formed on the inner surface of the pack cover.

12. The battery pack according to claim 1,
wherein the first top venting passage and the second top venting passage are formed inside the pack cover.

13. The battery pack according to claim 12,
wherein the pack cover comprises:
a cover plate that covers the accommodation space of the pack housing;
a first passage plate coupled to the inner surface of the cover plate in the first accommodation space; and
a second passage plate coupled to the inner surface of the cover plate in the second accommodation space.

14. A vehicle comprising the battery pack according to any one of claims 1 to 13.
